# EUROPÄISCHE PATENTSCHRIFT

(11) **EP 3 590 676 B1**
(45) Veröffentlichungstag und Bekanntmachung des Hinweises auf die Patenterteilung: **12.02.2020**
(21) Anmeldenummer: 19187499.9
(22) Anmeldetag: 07.03.2016
(51) Int. Cl.: B29C 44/12

(54) **FLÄCHENGEBILDE IN SANDWICH-LEICHTBAU-AUSFÜHRUNG**
FLAT STRUCTURE IN LIGHTWEIGHT SANDWICH CONSTRUCTION
STRUCTURE PLANE EN VERSION DE CONSTRUCTION LÉGÈRE DE TYPE SANDWICH

(43) Veröffentlichungstag der Anmeldung: 08.01.2020
(62) Teilanmeldung aus: 16159028.6
(73) Patentinhaber: Maucher Formenbau GmbH & Co. KG, 88046 Friedrichshafen (DE)
(72) Erfinder: Strittmatter, Peter, 88046 Friedrichshafen (DE)
(74) Vertreter: Engelhardt, Volker

(56) Entgegenhaltungen:
- EP-A1- 1 097 794
- DE-A1-102008 032 730

## Beschreibung

Die Erfindung bezieht sich auf ein formstabiles Flächengebilde in Sandwich-Leichtbau-Ausführung sowie ein Flächengebilde nach dem Oberbegriff des Patentanspruches 1.

Es ist hinlänglich bekannt, unterschiedliche Werkstoffe in eine Sandwich-Anordnung zu bringen, diese miteinander zu verbinden und anschließend mittels Formwerkzeugen in eine formgebende Struktur zu überführen.

Durch die DE 10 2008 032 730 A1 ist ein Verfahren zum Herstellen eines mehrschichtigen Bauteiles in Form eines Flächengebildes beschrieben. Dabei besteht das Flächengebilde aus einem Trägerbauteil und einer Oberflächenschicht. Diese werden in ein Formwerkzeug mit einem Zwischenraum eingelegt. Zwischen dem Trägerbauteil und der Oberflächenschicht soll ein Freiraum vorhanden sein, in den EPP-Partikel Schaumstoff eingefüllt ist.

Aus der EP 1 097 794 A1 ist ein Formwerkzeug zur Herstellung von mehrschichtigen Formteilen und seine Verwendung beschrieben, dabei soll das Formteil durch umformen insbesondere durch ein Zieh-Formen von im Wesentlichen flächigen thermoplastischen Halbzeugen mit wenigstens einem Ober- und wenigstens einem Unterwerkzeug und zumindest an einem der Werkzeuge angeordnet gesteuerten beweg baren Verschlussteilen, zum ganzseitigen Begrenzen des Formraumes, die Verschlussteile temperierbar, vorgesehen sein.

Als nachteilig hat sich dabei herausgestellt, dass die entsprechenden Werkstoffpaarungen auf der einen Seite die Stabilität des hergestellten Flächengebildes beeinflussen und auf der anderen Seite die Eigengewichtskraft des Flächengebildes betreffen. Wenn beispielsweise eine Werkstoffpaarung aus verschiedenen Kunststoffen gewählt ist, ist oftmals die Eigengewichtskraft des Flächengebildes geringer als wenn das Flächengebilde aus einer Werkstoffpaarung aus Metall gefertigt ist. Durch die Reduzierung der Eigengewichtskraft verliert jedoch das hergestellte Flächengebilde an Formstabilität, so dass dieses lediglich für einen eng begrenzten Verwendungszweck benutzt werden kann.

Aus dem zitierten Stand der Technik ist es zwar bekannt Werkstoffpaarungen aus thermoplastischen und EPP-Partikel-Schaumstoff miteinander zu kombinieren, um ein Flächengebilde zu schaffen, dass verformbar ist und dass eine gewisse Eigenstabilität aufweist, jedoch ist aus diesem Stand der Technik nicht zu entnehmen, dass die Werkstoffpaarungen in einem bestimmten Herstellungsverfahren miteinander verbunden werden können. Die verwendeten Werkstoffe sind daher unkontrolliert bzw. oftmals ungenügend verteilt zur Herstellung des Kernes angeordnet, wodurch der Kern als Trägerlicht unterschiedliche Festigkeitsbereiche aufweist. In Bereichen mit einer geringen Partikelanordnung können Durchbrüche oder sonstige Beschädigungen entstehen, da dort die Wandstärke geringer ist und/oder die Festigkeit kleiner ist als in benachbarten Bereichen. Eine solche Instabilität oder Inhomogenität des verwendeten Werkstoffes EPP führt demnach zu Beschädigungen, wenn in diesen Bereichen entsprechende Belastungen einwirken.

Es ist daher Aufgabe der Erfindung, ein formstabiles Flächengebilde bereitzustellen, durch das zum einen ein solches in Sandwich-Leichtbau-Ausführung gefertigt werden kann und zum anderen eine sehr hohe Eigenstabilität oder Biegesteifigkeit aufweist, so dass das gefertigte Flächengebilde in einer Vielzahl von unterschiedlichsten Verwendungen einsetzbar ist, bspw. um Ersatzräder in Fahrzeuge aufzunehmen, um als Unterboden oder Karosserie für Fahrzeuge zu dienen, um eine Abdeckhaube zu bilden oder dgl. mehr.

Diese Aufgaben sind erfindungsgemäß durch die Merkmale des Patentanspruches 1 gelöst.

Weitere vorteilhafte Weiterbildungen der Erfindung ergeben sich aus den Unteransprüchen.

Es ist besonders vorteilhaft, wenn die Deckschichten des Flächengebildes aus einem Thermoplastwerkstoff und der Kern aus einem expandierbaren Polypropylen (EPP), einem expandierbaren Polystryrol (EPS) oder einem expandierbaren Polyethylen (EPE) bestehen, denn dadurch ist gewährleistet, dass zum einen eine feste Verbindung zwischen der jeweiligen Deckschicht und dem Kern entsteht und zum anderen das derart gefertigte Flächengebilde im aufgeheizten Zustand mittels zweier Formwerkzeuge in eine Struktur umgeformt werden kann, die nach dem Aushärten bzw. Abkühlen eine formstabile Kontur aufweist, mit einer extrem hohen Biegesteifigkeit. Die Deckschichten sind nämlich durch den dazwischen angeordneten Kern vollflächig miteinander verbunden, so dass ein einstückiges Flächengebilde entsteht und gleichzeitig ist die Biegesteifigkeit der Deckschichten durch den Kern erhöht.

Die eingelegten Kerne oder die eingespritzten Volumenteile, die den Kern anschließend bilden, können mittels Wasserdampf erhitzt werden, so dass sich deren Ausdehnung vergrößert und die Volumenteile zu einem Kern verschmolzen sind, wodurch während des Umformvorganges zwischen den beiden Formwerkzeugen eine erhöhte Stabilität oder Biegesteifigkeit des derart gefertigten Flächengebildes einstellbar ist.

Die die Deckenschichten bildenden Werkstoffe sind gasdurchlässig, so dass sowohl der Wasserdampf aus dem Kern durch die jeweilige Deckschicht entweichen kann als auch während des Einlege- oder Einspritzungsvorganges ein Unterdruck erzeugt werden kann, durch den die Kerne in ihrer Ausdehnung reduziert sind. Nach dem oder während des Umformvorganges kann ein entsprechender Überdruck auf den Kern einwirken, so dass die den Kern bildenden Partikel der Werkstoffe aufgeweitet sind, wodurch sich eine Erhöhung der Biegesteifigkeit und/oder der Wandstärke des Flächengebildes erzeugen lässt.

Die aus den angegebenen Werkstoffen gefertigten Flächengebilde weisen demnach eine hohe Eigenstabilität und Biegesteifigkeit auf, so dass diese vorteilhafterweise in einer Vielzahl von unterschiedlichsten Anwendungen einsetzbar sind. Beispielsweise können solche Flächengebilde als Abdeckhauben, als Unterkonstruktion oder als Einlagegehäuse in Fahrzeugkarosserien verwendet werden. Es ist auch denkbar, diese Flächengebilde als Möbelstück, beispielsweise Schrankwand oder Bettgestell, zu verwenden. Wenn diese Flächengebilde einer erhöhten Verschmutzung durch Schmutzwasser und/oder Hitzestrahlung, beispielsweise von Auspuffrohren, ausgesetzt sind, ist es vorteilhaft, die der jeweiligen Verschmutzungs- oder Hitzeseite zugewandte Oberfläche des Flächengebildes zu verkleiden, beispielsweise durch eine Metallfolie oder durch einen entsprechenden Teppich oder eine sonstigen Schutzschicht aus Kunststoff oder einem anderen Material, das flüssigkeits- oder gasabweisend ist.

In der Zeichnung sind drei erfindungsgemäße Herstellungsverfahren für ein Flächengebilde in Sandwich-Leichtbau-Ausführung im Schnitt dargestellt, die nachfolgend näher erläutert sind. Im Einzelnen zeigt:
- Figuren 1a bis 1c sowie 2: ein erstes Herstellungsverfahren für ein formstabiles Flächengebilde mit zwei Deckschichten und einem einstückigen, plattenförmigen Kern,
- Figuren 3a und 3b: ein zweites Herstellungsverfahren für ein Flächengebilde mit zwei Deckschichten und einem Kern, der aus einer Vielzahl von vereinzelten oder schaumförmig miteinander verbundenen Volumenteilen gebildet ist, die in einen von den beiden Deckschichten eingeschlossenen Zwischenraum eingespritzt oder eindrückt sind,
- Figuren 4a und 4b: ein drittes Herstellungsverfahren für ein Flächengebilde mit zwei Deckschichten und einem vorstrukturierten, plattenförmigen Kern und
- Figuren 5a bzw. 5b: das nach einem der Herstellungsverfahren gefertigte Flächengebilde bzw. ein Flächengebilde mit einer zusätzlichen Schutzschicht aus einem Gewebe oder einem Vlies.

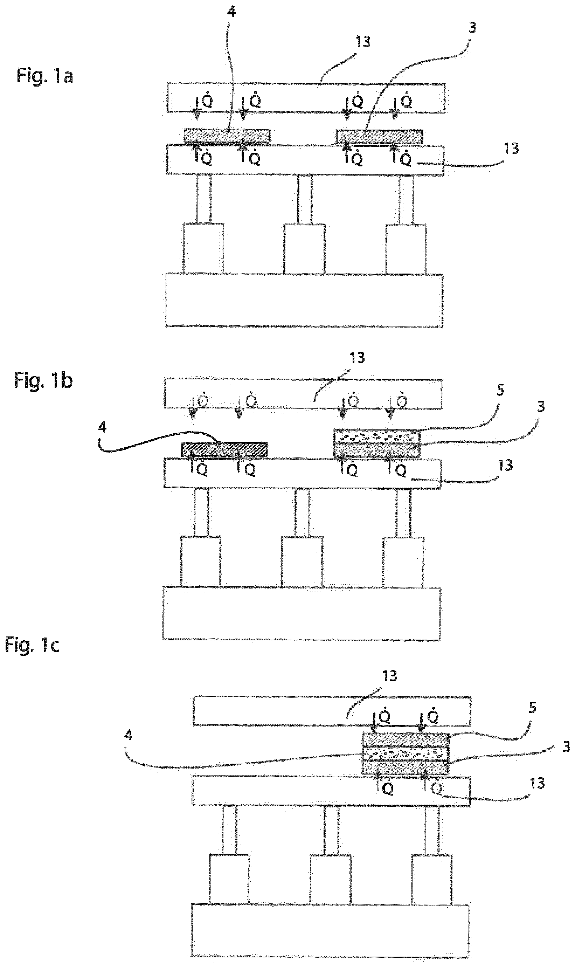

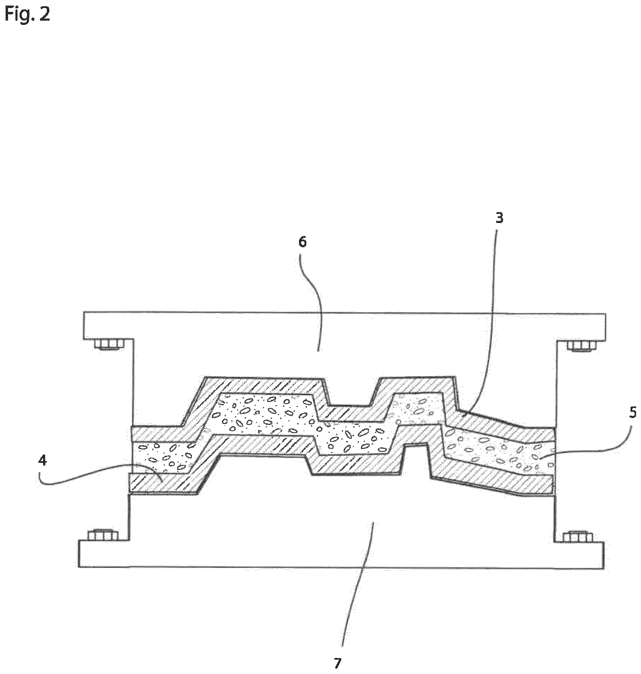

Ein in Leichtbau-Ausführung hergestelltes Flächengebilde 1 besteht gemäß den Figuren 1a bis 5b aus mindestens zwei Deckschichten 3, 4 und einem zwischen zwei Deckschichten 3,4 angeordneten Kern 5, die folglich in einer Sandwichbauweise angeordnet sind. Die jeweilige Deckschicht 3,4 ist aus einem Thermoplast-Werkstoff gebildet. Der Kern 5 ist dagegen aus einem expandierbaren Polypropylen (EPP), einem expandierbaren Polystyrol (EPS) oder einem expandierbaren Polyethylen (EPE) oder einem gleichwertigen expandierbaren Thermoplast-Werkstoff ausgeführt.

In den Figuren 1a bis 1c ist zu entnehmen, dass die einstückigen, plattenförmigen Deckschichten 3, 4, die vorzugsweise aus einem sogenannten low weight resistant thermoplast (LWRT) bestehen, vereinzelt vorgewärmt sind. Als Wärmequelle dient beispielsweise eine Infrarotlampe. In den Figuren 1a bis 1c ist der Wärmestrom von der Wärmeeinrichtung 13, beispielsweise der Infrarotlampe, auf die beiden Deckschichten 3, 4 schematisch mit der thermodynamisch üblichen Bezeichnung **Q̇** dargestellt.

Sobald die beiden Deckschichten 3, 4 auf eine vorgegebene Temperatur erwärmt sind, wird zwischen diesen ein einstückiger plattenförmiger Kern 5 aus einem der vorgenannten Werkstoffe (EPE, EPS oder EPP) eingelegt. Dieser Sandwich-Aufbau, bestehend aus den beiden Deckschichten 3, 4 und dem dazwischen angeordneten Kern 5, ist als Zwischen-Körper 2 bezeichnet. Dieser Körper 2 wird erneut erwärmt bzw. aufgeheizt, und zwar solange bis ein thermoplastischer Verformungszustand der verwendeten Werkstoffe erreicht ist. Dies führt dazu, dass zwischen dem Kern 5 und der jeweiligen Deckschicht 3 oder 4 eine Verbindung durch die Verschmelzung der Kontaktflächen zwischen der Deckschichten 3, 4 und dem Kern 5 erfolgt.

Sobald der Körper 2 in diesem thermoplastisch verformbaren Zustand aufgeheizt ist, wird dieser zwischen zwei Formwerkzeugen 6, 7 eingelegt, die eine vorgegebene Struktur aufweisen. Dabei korrespondieren die beiden Formwerkzeuge 6, 7 derart miteinander, dass diese eine Negativform des zu bildenden Flächengebildes 1 aufweisen. Wenn demnach die beiden Formwerkzeuge 6, 7 aufeinander zugestellt werden, wird der dazwischen eingelegte Körper 2 von den beiden Formwerkzeugen 6, 7 umgeformt, so dass die Konturen der Formwerkzeuge 6, 7 auf den Körper 2 übertragen sind. Nach dem Umformvorgang kühlt das Flächengebilde 1 zunächst in den Formwerkzeugen 6, 7 auf eine vorgegebene Temperatur derart ab, so dass eine thermoplastische Verformung nicht mehr möglich ist. Anschließend werden die beiden Formwerkzeuge 6, 7 voneinander getrennt und das abgekühlte und umgeformte Flächengebilde 1 kann entnommen werden. Der Abkühlvorgang kann dabei passiv oder durch aktive Kühlung, zur Verkürzung der Standzeiten, durchgeführt werden.

Das Flächengebilde 1 ist nach diesem Verfahrensschritt formstabil und weist aufgrund der Sandwichlichtbauform mit den beiden Deckschichten 3, 4 und dem Kern 5 hohe Festigkeiten auf.

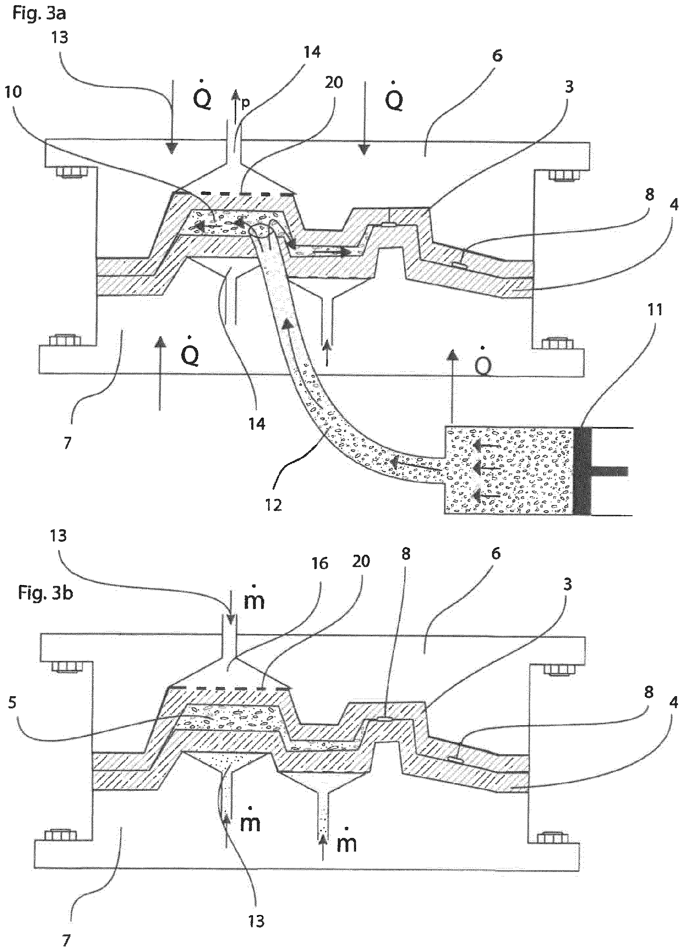

In Figur 3a ist gezeigt, dass die beiden Deckschichten 3, 4 zu einem nahezu vollständig geschlossenen Körper 2 zusammengefügt werden können, und zwar vor oder nach dem Erwärmen der beiden Deckschichten 3, 4. Die Deckschichten 3, 4 schließen demnach einen Zwischenraum 10 ein, denn die einstückigen und plattenförmigen Deckschichten 3, 4 sind voneinander beabstandet angeordnet und lediglich in ihrem Randbereich oder bereichsweise in ihrem Innenraum miteinander verbunden.

Die Deckschichten 3, 4 können an dem Formwerkzeuge 6, 7 mittels einer Unterdruckeinrichtung 14 durch einen Unterdruck oder mittels ein oder mehrerer Nadeln 8 gehalten sein. Hierzu sind in die Formwerkzeuge 6, 7 ein oder mehrere poröse Bereiche 20 in Form von Öffnungen oder Siebflächen eingearbeitet oder angebracht. Der poröse Bereich 20 ist gasdurchlässig und steht in Wirkverbindung mit der Unterdruckeinrichtung 14. Somit kann der gebildete Unterdruck auf die jeweilige Deckschicht 3, 4 direkt wirken.

Der den Kern 5 bildende Werkstoff ist vereinzelt und beispielsweise kugelförmig als Volumenteil 12 dargestellt. Die vereinzelten Volumenteile 12 sind mittels eines Drucckolbens 11 durch eine Einfüllöffnung 15 in den Zwischenraum 10 beispielsweise mittels eines Einfüllstutzens eingepresst oder eingespritzt und werden in diesem gleichmäßig verteilt.

Die optimale Verteilung der vereinzelten Volumenteile 12 kann beispielsweise durch einen Unterdruck erfolgen. Die Werkstoffe der Deckschichten 3, 4 sind nämlich gasdurchlässig, so dass aus dem Zwischenraum 10 mittels der Unterdruckeinrichtung 14 ein Unterdruck in dem Zwischenraum 10 erzeugen lässt. Dadurch sind zum einen die Größen bzw. Ausdehnungen der Volumenteile 12 in Abstimmung mit dem Förderdruck des Druckkolbens 11 einstellbar und zum anderen erfolgt eine gleichmäßige Verteilung der Volumenteile 12 im gesamten Zwischenraum 10.

Sobald die Volumenteile 12 vollständig in den Zwischenraum 10 eingefüllt sind ist die Einfüllöffnung 15 bzw. der Einfüllstutzen aus dem Zwischenraum 10 entfernt. Mittels einer Wärmezufuhr, vorzugsweise durch einen Massenstrom ***ṁ*** von Heißwasserdampf 16 der durch den porösen Bereich 20 einbringbar ist, können die Volumenteile 12 fest miteinander verbunden werden, so dass ein einstückiger Kern 5 entsteht. Außerdem ist durch den Heißwasserdampf oder -strahl 16 erreicht, dass sich die Volumenteile 12 erweitern, im Vergleich mit ihrer ursprünglichen Ausdehnung während des Einfüllvorganges. Da die beiden Deckschichten 3, 4 fest an dem Formwerkzeug 6, 7 anliegen und miteinander verbunden sind, vergrößert sich der Zwischenraum 10 nicht, so dass bei einer Volumenausdehnung der Volumenteile 12 eine Festigkeitserhöhung stattfindet. Durch diese Expansion der Volumenteile 12 entsteht in dem Zwischenraum 10 ein Überdruck der die Deckschichten 3, 4 gegen das jeweilige Formwerkzeug 6, 7 presst, so dass eine besonders hohe Formgüte des Flächengebildes 1 erzielt ist. Ferner werden die Volumenteile 12 zu dem Kern verschmolzen und die Deckschichten 3, 4 und der Kern 5 miteinander verschmolzen bzw. verbunden.

Anschließend verweilt zur Abkühlung das derart gebildete Flächengebilde 1 im dem Formwergzeug 6, 7 für eine gegebene Zeit, bis der schmelzflüssige Zustand der eingesetzten Werkstoffe nicht weiter vorherrscht. Die Abkühlung kann durch aktive Kühltechniken beschleunigt werden.

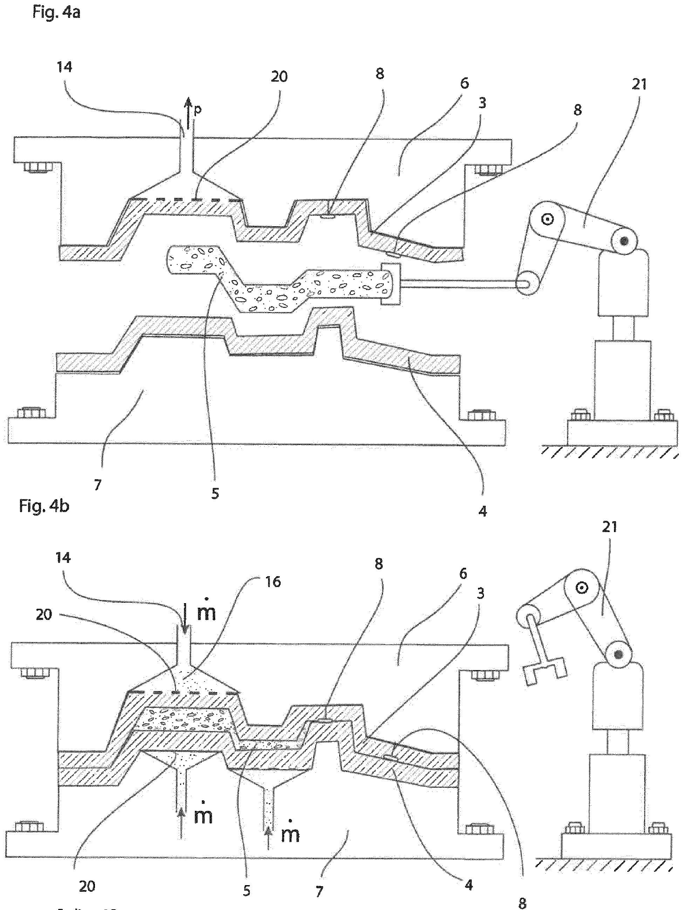

In Figur 4a ist dargestellt, dass sowohl die vorgewärmten Deckschichten 3, 4 auf dem Formwerkzeug 6, 7 als auch der Kern 5 durch eine Positioniervorrichtung 21 an die für diesen vorgesehene Position gehalten sind. Der Kern 5 ist im vormontierten Zustand einstückig und bereits strukturiert ausgeführt. Im Wesentlichen stimmt die Strukturierung des Kerns 5 mit dem sich zwischen den Deckschichten 3, 4 bilden Zwischenraum 10 überein jedoch kann durch eine Aufmaß der Strukturierung des Kerns gezielt Einfluss auf die Festigkeitseigenschaften des Kerns 5 im fertigen Flächengebilde 1 genommen werden.

Durch das Zustellen des Formwerkzeug 6, 7 werden die schmelzflüssigen und thermoplastisch verformbaren Deckschichten 3, 4 entsprechend der Vorgabe des Formwerkzeuges 6, 7 um den Kern 5 umgeformt aus diesem Körper 2 wird das Flächengebildes 1 somit gebildet.

Mittels einer Wärmeeinrichtung 13, ist vorzugsweise durch Heißwasserdampf **ṁ** eingebracht, wodurch der Kern 5 fest mit den Deckschichten 3, 4 durch einen verschmelzen der Kontaktflächen verbunden werden. Außerdem ist durch den Heißwasserstrahl oder -dampf 16 erreicht, dass sich die Volumenteile 12 des Kerns 5 expandiert sind. Da die beiden Deckschichten 3, 4 fest an dem Formwerkzeug 6, 7 anliegen und miteinander verbunden sind, vergrößert sich der Zwischenraum 10 nicht, so dass bei einer Volumenausdehnung der Volumenteile 12 des Kerns 5 eine Festigkeitserhöhung stattfindet.

Anschließend verweilt zur Abkühlung das derart gebildete Flächengebilde 1 im dem Formwergzeug 6, 7 bis der schmelzflüssige Zustand der eingesetzten Werkstoffe nicht weiter vorherrscht. Die Abkühlung kann durch aktive Kühltechniken beschleunigt werde. Das Kühlmedium kann das Formwerkzeug 6, 7 aktiv kühlen oder ebenfalls analog zu dem Heißwasserstrahl oder -dampf 16 durch den porösen Bereich 20 eingeblasen bzw. aufgebracht werden.

Nach Beendigung des Umformvorganges ist es oftmals erforderlich, die Ränder des Flächengebildes 1 zu bearbeiten, denn diese sind abzukanten oder abzugraten bzw. mit Phasen zu versehen, um Verletzungen oder sonstige Beschädigungen an empfindlichen Oberflächen zu vermeiden.

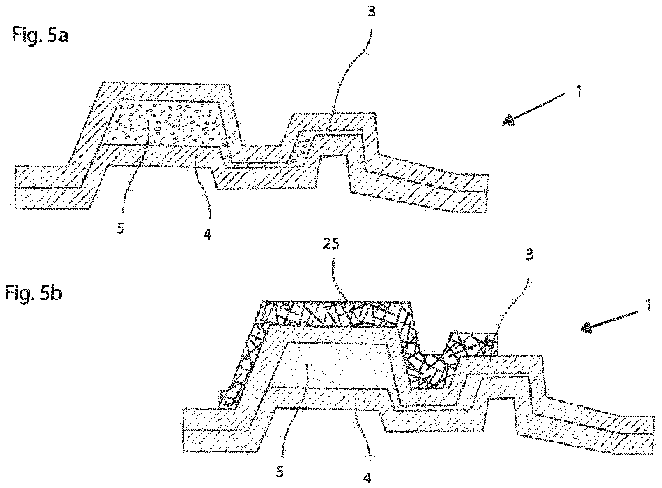

In Figur 5a ist das fertige Flächengebilde 1 dargestellt. Die Deckschichten 3, 4 können aus unterschiedlichen und der Anwendung angepassten Thermoplast-Werkstoffen gebildet werden. Eine Beimischung von Schnittfasern oder einer Verstärkung der Werkstoffe durch die Zugabe von Geweben kann erfolgen.

Das in Figur 5b dargestellte Flächengebilde 1 ist mit einer Funktionsschicht 25 auf einer der Außenseite übermantelt. Die Funktionsschicht 25 kann gas- und/oder flüssigkeitsdicht ausgeführt sein und als Sichtschutz, beispielsweise Teppich, ausgeführt werden. Es ist auch möglich, die Funktionsschicht 25 hitzebeständig oder hitzeabweisend auszuführen, so dass das hergestellte Flächengebilde 1 in einem Bereich mit Hitze, die beispielsweise von Auspuffrohren stammt, eingebaut werden kann. Die gemäß den vorstehenden Figuren herstellte Form des Flächengebildes 1 ist dabei völlig beliebig, so dass in alle Richtungen abstehende Hinterschneidungen, Vorsprünge, Nasen oder dgl. angeformt bzw. angearbeitet werden können, die in dem einzigen Umformvorgang entstehen.

Die Verwendung des erfindungsgemäßen Flächengebildes 1 soll und kann völlig beliebig sein. Es ist vorstellbar, das Flächengebilde 1 als Abdeckhaube, als Gehäuseeinlage, als Unterboden oder Unterkonstruktion an Fahrzeugkarosserien bzw. in Fahrzeugräume einzusetzen. Es ist auch möglich, das Flächengebilde 1 als Möbelstück, beispielsweise Schrankwand oder Bettgestell, auszuführen. Darüber hinaus ist es vorstellbar, das Flächengebilde 1 als Gehäuse von Monitoren oder Werkzeugmaschen zu verwenden.

Es versteht sich, dass eine beliebige Anzahl von Deckschichten 3, 4 abwechselnd zu dem Kern 5 vorgesehen sein können, so dass das Flächengebilde 1 aus einer Vielzahl von Deckschichten 3, 4 und Kernen 5 aufgebaut ist.

## Patentansprüche

1. Flächengebilde (1), das mindestens aus zwei Deckschichten (3, 4) und einem zwischen diesen angeordneten Kern (5) aufgebaut ist als Sandwich-Leichtbau-Ausführung, bestehend aus dem Kern (5), der aus einem expandierbaren Thermoplast-Werkstoff, vorzugsweise Polyprophylen (EPP), Polystyropor (EPS) bzw. Polyethylen (EPE), und die dazu benachbart angeordnete Deckschicht (3, 4) aus mindestens einem Thermoplast-Werkstoff geformt ist,
**dadurch gekennzeichnet,**
**dass** der Kern (5) während des Herstellungsverfahrens mittels einer Unterdruckeinrichtung (14) zwischen den beiden benachbarten Deckschichten (3, 4) durch einen Unterdruck gebildet ist, der auf den Kern (5) einwirkt, und dass durch den Unterdruck die Aushärtung und die Verteilung der den Kern (5) bildenden Volumenteile (12) derart beeinflusst ist, dass das ausgehärtete Flächengebilde (1) Bereiche mit unterschiedlichen Härte- oder Festigkeitseigenschaften aufweist.

2. Flächengebilde nach Anspruch 1,
**dadurch gekennzeichnet,**
**dass** durch den Umformvorgang durch die Formzeuge (6, 7) an dem gefertigten Flächengebilde (1) Hinterschneidungen, Überstände oder sonstige Anformungen angearbeitet sind, die aus der von dem Flächengebilde (1) im Wesentlichen gebildeten Ebene abstehen und/oder parallel zu dieser verlaufen.

3. Flächengebilde nach einem der Ansprüche 1 bis 2,
**dadurch gekennzeichnet,**
**dass** das Flächengebilde (1) als Abdeckhaube, als Unterkonstruktion für Sitze, als Unterbodenschutz für Fahrzeuge, als Einlagekörper in Kofferräumen von Fahrzeugen, als Trennwand in Räumen, als Möbelstück, beispielsweise Schrankwand bzw. Bettgestell oder als Karosserieteil an einem Fahrzeug verwend bar ist.

## Claims

1. A flat structure (1) built up from at least two covering layers (3, 4) and a core (5) arranged between them as a lightweight sandwich construction, consisting of the core (5) formed from an expandable thermoplastic material, preferably polypropylene (EPP), polystyrene (EPS) or polyethylene (EPE) and the covering layer (3, 4) formed of a thermoplastic material and arranged adjacent to the core (5),
**characterised in that**,
the core (5) is formed during the manufacturing process using a negative pressure device (14) between the two adjacent covering layers (3, 4) by means of negative pressure acting on the core (5), and that the negative pressure influences the hardening and distribution of the partial volumes (12) forming the core (5) in such a way that the hardened flat structure (1) has areas with different hardness or strength properties.

2. The flat structure in accordance with Claim 1,
**characterised in that**,
the forming procedure with the forming dies (6, 7) results in undercuts, projections or other shapes being worked onto the finished flat structure (1) which project from the plane chiefly formed by the flat structure (1) and/or run parallel to it.

3. The flat structure in accordance with Claim 1 and 2,
**characterised in that**,
the flat structure (1) can be used as a covering hood, as a substructure for seats, as underbody protection for vehicles, as an inlay in luggage compartments of vehicles, as a partition wall in rooms, as a piece of furniture for example a cabinet wall or bet frame or as a body part on a vehicle.

## Revendications

1. Structure plate (1) de construction légère en sandwich, composée d'au moins deux couches de recouvrement (3, 4) et d'un noyau (5) disposé entre celles-ci, comprenant le noyau (5) réalisé en matériel thermoplastique extensible, de préférence du polypropylène (EPP), du polystyrène (EPS) ou du polyéthylène (EPE), et où la couche de recouvrement voisine (3, 4) est réalisée en au moins un matériel thermoplastique,
**caractérisée en ce que**
moyennant un dispositif de dépression (14), le noyau (5) est formé durant le procédé de fabrication par dépression entre les deux couches de recouvrement voisines (3, 4), la dépression agissant sur le noyau (5), et que la dépression a pour effet que le durcissement et la répartition des parts de volume (12) consistant le noyau (5) sont influencés de sorte que la structure plate (1) possède des endroits avec des propriétés de dureté ou de rigidité différentes.

2. Structure plate d'après la revendication 1,
**caractérisée en ce que**
lors du façonnage par les outils de façonnage (6, 7) il est pratiqué, sur la structure plate réalisée (1), des contre-dépouilles, des saillies ou d'autres formes saillant du plan formé essentiellement par la structure plate (1) et/ou qui s'étendent parallèlement à celle-ci.

3. Structure plate d'après les revendications 1 ou 2,
**caractérisée en ce que**
la structure plate (1) peut servir de capot de recouvrement, d'armature pour sièges, de protection du bas de caisse de véhicules, de corps d'insertion dans des coffres de véhicule, de parois de séparation dans des pièces, de meubles, tels que des éléments muraux ou des cadres de lits ou en tant qu'élément de carrosserie de véhicules.
